# FASCICULE DE BREVET EUROPEEN

(11) **EP 1 640 264 B1**
(45) Date de publication et mention de la délivrance du brevet: **14.09.2011**
(21) Numéro de dépôt: 05352016.9
(22) Date de dépôt: 23.09.2005
(51) Int. Cl.: B64C 9/00, B64C 31/028

(54) **Dispositif d'aileron pour aéronef léger, notamment un avion, comportant une ossature structurelle de type tubulaire.**
Querruder für leichtes Luftfahrzeug, insbesondere ein Flugzeug, mit röhrenförmigstrukturellem Rahmen
Aileron for light aircraft, in particular an airplane, comprising a tubular structural framework

(30) Priorité: 24.09.2004 FR 0410109
(43) Date de publication de la demande: 29.03.2006
(73) Titulaire: Prévot, Philippe, 82000 Montauban (FR)
(72) Inventeur: Prévot, Philippe, 82000 Montauban (FR)
(74) Mandataire: Morelle, Guy Georges Alain

(56) Documents cités:
- FR-A- 2 645 116
- GB-A- 143 616
- US-A- 3 730 459
- US-A- 6 123 296

## Description

Le présente invention se rapporte à un dispositif d'aileron pour aéronef léger comportant une ossature structurelle de type tubulaire dotée pour chacune des ailes d'un longeron de bord d'attaque et d'un longeron de bord de fuite réunis par une pluralité de nervures, comportant au moins :
- un aileron droit,
- des moyens d'articulation autour d'un axe d'articulation, de l'aileron droit sur le longeron de bord de fuite de l'ossature d'aile droite de l'aéronef,
- un aileron gauche,
- des moyens d'articulation autour d'un axe d'articulation, de l'aileron gauche sur le longeron de bord de fuite de l'ossature d'aile gauche de l'aéronef,
- des moyens de commande des ailerons droit et gauche.

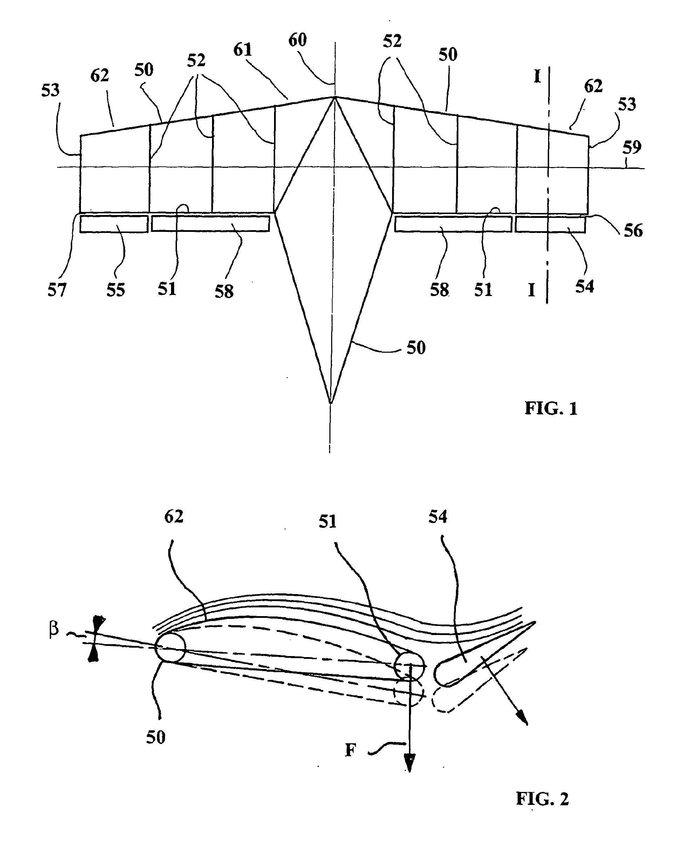

L'art antérieur enseigne de tels dispositifs d'aileron, par exemple tel qu'illustré sur la figure 1 de manière schématique. Sur cette figure 1, on a représenté une ossature structurelle de type tubulaire 61 simplifiée d'avion léger, dotée pour chacune des ailes 62 d'un tube de bord d'attaque 50 et d'un tube de bord de fuite 51 réunis par une pluralité de nervures ou de tubes de compression 52 dont un bord latéral 53 extérieur ou bord marginal, le dispositif d'aileron comportant :
- un aileron droit 54,
- des moyens d'articulation 56 autour d'un axe d'articulation, de l'aileron droit sur le bord de fuite de l'ossature d'aile droite de l'aéronef,
- un aileron gauche 55,
- des moyens d'articulation 57 autour d'un axe d'articulation, de l'aileron gauche sur le bord de fuite de l'ossature d'aile gauche de l'aéronef.

Le tube de bord de fuite 51 de l'ossature de chacune des ailes porte le ou les volets 58 (un volet unique par aile a été représenté sur la figure 1 à titre d'exemple) et l'aileron 54, ceux-ci étant articulés sur le bord de fuite afin d'assumer leur fonction respective, soit pour les volets la rotation de l'avion autour de l'axe de tangage 59, et pour les ailerons la rotation de l'avion autour de l'axe de roulis 60. Un tel dispositif d'aileron présente des inconvénients comme cela va être expliqué ci-dessous avec l'aide de la figure 2.

Un autre dispositif d'aileron avec des ailerons inclinés est présenté dans le document GB 143-616.

Sur la figure 2, on a représenté de manière schématique la coupe d'une aile de l'avion de la figure 1, suivant l'axe longitudinal de l'avion (coupe transversale de l'aile). L'aileron droit lorsqu'il est braqué vers le haut entraîne une diminution de la portance de l'aile correspondante (aile droite), donc une rotation de l'avion autour de l'axe de roulis vers la droite. L'aileron gauche lorsqu'il est braqué vers le bas entraîne une augmentation de la portance de l'aile correspondante (aile gauche), donc une rotation de l'avion autour de l'axe de roulis vers la droite. Les deux mouvements ci-dessus de l'aileron droit et de l'aileron gauche sont combinés dans le but de faire tourner l'avion vers la droite autour de l'axe de roulis. La manoeuvre inverse des ailerons entraîne une rotation de l'avion autour de l'axe de roulis vers la gauche.

En termes d'efforts, lorsque l'aileron de l'aile droite est braqué vers le haut ou levé, comme représenté sur la figure 2, celui-ci exerce sur le tube de bord de fuite sur lequel il est articulé un effort F dirigé vers le bas qui a tendance à faire descendre le bord de fuite comme représenté sur la figure 2, ce qui provoque un vrillage de l'aile et une augmentation induite de l'angle d'incidence β de celle-ci qui entraîne à son tour une augmentation de la portance avec ainsi un effet inverse à celui recherché par le braquage vers le haut de l'aileron. Un effet inverse à celui recherché, de même nature, est obtenu par le braquage vers le bas de l'aileron. Ainsi donc, une manoeuvre de l'aileron provoque sur l'aile des efforts induits qui contrecarrent l'effet de ladite manoeuvre de l'aileron, ce qui diminue l'efficacité de ce dernier.

La présente invention permet d'éviter cet inconvénient et d'apporter d'autres avantages. Plus précisément, elle consiste en un dispositif d'aileron pour aéronef léger comportant une ossature structurelle de type tubulaire dotée pour chacune des ailes d'un longeron de bord d'attaque et d'un longeron de bord de fuite réunis par une pluralité de nervures, comportant au moins :
- un aileron droit,
- des moyens d'articulation autour d'un axe d'articulation, de l'aileron droit sur le longeron de bord de fuite de l'ossature d'aile droite de l'aéronef,
- un aileron gauche,
- des moyens d'articulation autour d'un axe d'articulation, de l'aileron gauche sur le longeron de bord de fuite de l'ossature d'aile gauche de l'aéronef,
- des moyens de commande des ailerons droit et gauche,
caractérisé en ce que le longeron de bord de fuite de l'ossature des ailes droite et gauche comporte respectivement une première partie et une deuxième partie formant entre elles un angle α compris entre 90° exclu et 180° exclu, de telle sorte que :
- la première partie du longeron de bord de fuite est rattachée par une de ses extrémités à l'ossature de fuselage,
- la deuxième partie du longeron de bord de fuite est liée par une de ses extrémités à l'autre extrémité de ladite première partie, porte l'aileron, et s'étend en direction du bord d'attaque, en sorte de déplacer le foyer d'aileron ou la résultante des efforts exercés par l'air sur l'aileron vers le bord d'attaque.

La formation d'un angle inférieur à 180° mais supérieur à 90° entre la partie de longeron du bord de fuite rattachée à l'ossature de fuselage, qui porte le ou les volets le cas échéant, et la partie de longeron du bord de fuite qui porte l'aileron en sorte de déplacer le foyer d'aileron, c'est à dire déplacer la résultante des efforts sur l'aileron exercés par l'air dans lequel se déplace l'avion, vers le bord d'attaque, permet de diminuer le couple généré par cette résultante ayant tendance à faire descendre le bord de fuite lorsque l'aileron est braqué vers le haut, en déplaçant cette résultante, donc son point d'application, vers le bord d'attaque. En outre, le fait de déplacer le foyer d'aileron vers le bord d'attaque, entraîne le déplacement de l'aileron lui-même vers le bord d'attaque, et ce dernier se trouve ainsi dans une zone où la corde d'aile est faible et de ce fait, dans une zone où les perturbations aérodynamiques sont faibles ; en conséquence, l'efficacité de l'aileron s'en trouve accrue, les décrochements de ce dernier survenant à des angles d'incidence ou des vitesses plus élevés ; une conséquence de cet avantage, est de permettre une réduction de la surface de l'aileron par rapport à la surface d'un aileron conventionnel; une autre conséquence du dispositif selon l'invention est de permettre d'augmenter la longueur des volets du fait de la réduction de surface de l'aileron et de la formation d'un angle rapprochant ce dernier du bord d'attaque ; un volet de plus grande longueur permet une amélioration des performances aérodynamiques de l'aile donc une vitesse inférieure d'atterrissage ou une réduction de surface d'aile pour une vitesse d'atterrissage similaire à celle de l'art antérieur mais permettant une augmentation de la vitesse de l'aéronef.

Selon une caractéristique avantageuse, ladite deuxième partie du longeron de bord de fuite est liée par son autre extrémité au bord d'attaque.

Cette caractéristique permet de rééquilibrer au mieux la résultante des efforts exercés par l'air sur l'aileron entre le bord d'attaque et le bord de fuite en sorte de réduire de manière très significative, voire d'annuler, le vrillage de l'aile sous l'effet de la manoeuvre de l'aileron. Ainsi, l'efficacité de l'aileron est optimale. En outre, cette caractéristique permet d'augmenter la longueur de l'aileron et donc d'accroître encore son efficacité, permettant d'envisager un avion avec des commandes de roulis extrêmement précises, et répondant de manière très rapide.

Selon une caractéristique avantageuse, ladite deuxième partie du longeron de bord de fuite est liée par son autre extrémité à un bord latéral extérieur ou bord marginal de l'ossature d'aile.

Cette caractéristique permet d'envisager un avion avec des commandes de roulis plus douces, tout en bénéficiant d'une augmentation de l'efficacité de celles-ci.

Selon une caractéristique avantageuse, lesdites première et deuxième parties du longeron de bord de fuite sont des tubes droits.

Cette caractéristique permet de proposer un avion dont l'ossature est extrêmement simple, légère et peu coûteuse, permettant d'envisager une mise en oeuvre de l'invention sans surcoût significatif.

Selon une caractéristique avantageuse, l'axe d'articulation d'un aileron forme un angle α compris entre 90° exclu et 180° exclu, avec l'axe d'articulation d'un volet correspondant de l'aile.

Selon une caractéristique avantageuse, les ailerons comportent des côtés perpendiculaires à leur axe d'articulation, respectivement.

Cette caractéristique permet d'obtenir un effet compensateur de lacet inverse, avec une commande différentielle d'aileron. Rappelons que le lacet inverse est un phénomène provoqué par le déséquilibre des traînées dû au braquage des ailerons. En effet, l'augmentation de traînée est plus importante pour l'aileron baissé que pour l'aileron levé provoquant une rotation de l'avion autour de l'axe de lacet, ce lacet induit faisant tourner l'avion dans le sens inverse de celui souhaité par la manoeuvre des ailerons. La traînée de l'aileron baissé plus élevée faisant tourner l'avion du côté de cet aileron baissé alors que c'est une rotation inverse qui a été commandée.

Selon une caractéristique avantageuse, les ailerons adoptent une forme triangulaire, respectivement.

Selon une caractéristique avantageuse, les ailerons adoptent une forme s'élargissant sur leur longueur en s'étendant en direction du bord d'attaque, respectivement.

Selon une caractéristique avantageuse, les ailerons adoptent une forme s'étendant en avant du bord d'attaque, respectivement

Cette caractéristique qui confère une extension de chaque aileron en amont du bord d'attaque, permet d'accentuer l'effet recherché en ce qu'elle permet un déplacement plus grand du foyer d'aileron vers le bord d'attaque.

Selon une caractéristique avantageuse, les ailerons adoptent une forme s'étendant en avant du bord d'attaque et au delà de l'axe d'articulation des ailerons, respectivement.

Cette caractéristique qui confère une extension de chaque aileron de part et d'autre de son axe d'articulation dans le plan de l'aileron et dans la zone en amont du bord d'attaque, permet d'obtenir un effet de compensation des efforts appliqués sur la commande des ailerons.

Selon une caractéristique avantageuse, les ailerons adoptent une forme s'étendant en avant du bord d'attaque et au delà d'un axe parallèle à l'axe de roulis, respectivement.

Cette caractéristique confère aux ailerons une surface s'étendant de part et d'autre des lignes de courant dans le plan de chaque aileron et dans la zone en avant du bord d'attaque.

D'autres caractéristiques apparaîtront à la lecture de la description qui suit de plusieurs exemples de mode de réalisation d'un dispositif d'aileron selon l'invention, accompagnée des dessins annexés, exemples donnés à titre illustratif non limitatif.

La figure 1 représente de manière schématique une vue de dessus d'un avion comportant un dispositif d'aileron selon l'art antérieur.

La figure 2 représente de manière schématique une vue en coupe suivant la ligne I-I de la figure 1.

La figure 3 représente de manière schématique une vue de dessus d'un avion comportant un premier exemple de dispositif d'aileron selon l'invention.

La figure 4 représente de manière schématique une vue de dessus d'un avion comportant un deuxième exemple de dispositif d'aileron selon l'invention.

La figure 5 représente de manière schématique une vue de dessus d'un avion comportant un troisième exemple de dispositif d'aileron selon l'invention.

La figure 6 représente de manière schématique une vue de dessus d'un avion comportant un quatrième exemple de dispositif d'aileron selon l'invention.

La figure 7 représente de manière schématique une vue de dessus de l'extrémité de l'aile droite d'un avion comportant un cinquième exemple de dispositif partiel d'aileron selon l'invention.

La figure 8 représente de manière schématique une vue de dessus de l'extrémité de l'aile droite d'un avion comportant un sixième exemple de dispositif partiel d'aileron selon l'invention.

La figure 9 représente de manière schématique une vue de dessus de l'extrémité de l'aile droite d'un avion comportant un septième exemple de dispositif partiel d'aileron selon l'invention.

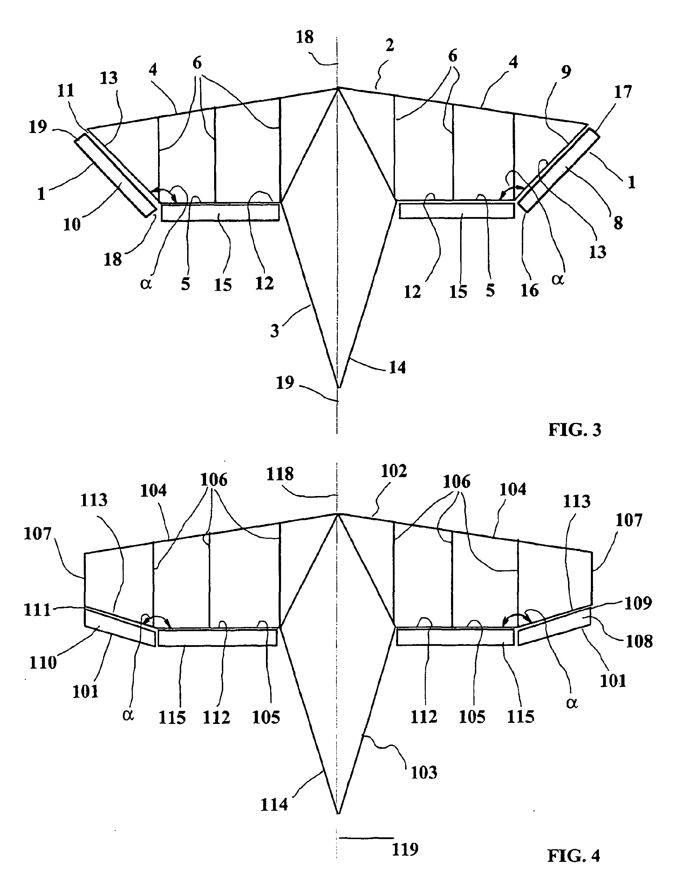

Le dispositif d'aileron 1 représenté sur la figure 3 est prévu pour un aéronef 2 léger comportant une ossature 3 structurelle de type tubulaire dotée pour chacune des ailes d'un longeron tubulaire de bord d'attaque 4 et d'un longeron tubulaire de bord de fuite 5 réunis par une pluralité de nervures 6, et comporte :
- un aileron droit 8,
- des moyens d'articulation 9 autour d'un axe d'articulation, de l'aileron droit 8 sur le tube de bord de fuite 5 de l'ossature d'aile droite de l'aéronef,
- un aileron gauche 10,
- des moyens d'articulation 11 autour d'un axe d'articulation, de l'aileron gauche 10 sur le tube de bord de fuite 5 de l'ossature d'aile gauche de l'aéronef,
- des moyens de commande des ailerons droit et gauche (non représentés),
   le tube de bord de fuite 5 de l'ossature des ailes droite et gauche comportant respectivement une première 12 partie et une deuxième 13 partie formant entre elles un angle α compris entre 90° exclu et 180° exclu, de telle sorte que :

- la première 12 partie du tube de bord de fuite est rattachée par une de ses extrémités à l'ossature de fuselage 14,
- la deuxième 13 partie du tube de bord de fuite est liée par une de ses extrémités à l'autre extrémité de la première partie 12, porte l'aileron, à savoir l'aileron 8 pour l'aile droite et l'aileron 10 pour l'aile gauche, et s'étend en direction du bord d'attaque 4, en sorte de déplacer le foyer d'aileron ou la résultante des efforts exercés par l'air sur l'aileron vers le bord d'attaque 4. Plus particulièrement, et de manière avantageuse, comme représenté sur l'exemple de la figure 3, la deuxième 13 partie du tube de bord de fuite 5 est liée par son autre extrémité au bord d'attaque 4.

De manière avantageuse, les première 12 et deuxième 13 parties du tube de bord de fuite 5 de chaque aile sont respectivement constituées de tubes droits.

Les liaisons entre les tubes constitutifs de l'ossature 3 structurelle tubulaire seront réalisées de toutes manières connues dans ce type de construction aéronautique, de sorte que les tubes travaillent en compression ou en extension.

Il est à noter que le recouvrement des ailes est effectué de toute manière connue, au moyen d'un film, appelé "chaussette", entourant les ossatures d'aile, et formant le profil d'aile grâce aux nervures 6 appropriées placées entre les poutres de bord d'attaque 4 et de bord de fuite 5. Des tubes de compression (non représentés) peuvent être utilisés de manière alternative à la place des nervures 6.

Il est à noter que toute ossature 3 structurelle tubulaire connue convient pour appliquer le dispositif d'aileron selon l'invention, par exemple une ossature du type tel que représenté très schématiquement sur la figure 3. A titre d'exemple, on peut citer l'ossature d'un avion ultra-léger de type ULM motorisé, commercialisé sous la dénomination "Sky Ranger" par la société Best-Off, qui convient pour l'application du dispositif d'aileron selon l'invention.

Sur la figure 3, le tube de bord d'attaque 4 et la première 12 partie du tube de bord de fuite 5 rattachée à l'ossature de fuselage 3 ne sont pas parallèles. La première 12 partie du tube de bord de fuite 5 est en effet représentée perpendiculaire au plan 18 de symétrie de l'avion passant par l'axe de roulis 19, et le tube de bord d'attaque 4 comme étant légèrement incliné vers l'arrière de l'appareil. Toutefois, l'inclinaison de la première partie 12 du tube de bord de fuite 5 et celle du tube de bord d'attaque 4, par rapport au plan de symétrie 18 peut être déterminée en fonction de besoins.

Sur la figure 3, la première partie 12 du tube de bord de fuite de chacune des ailes porte un volet 15 à titre d'exemple, articulé le long de cette première partie de toute manière connue, par exemple aux moyens d'articulation (non représentés) autour d'un axe d'articulation parallèle à cette première partie 12 du tube de bord de fuite. Les ailerons sont respectivement articulés le long de la deuxième partie 13 de tube de bord de fuite 5 de toute manière connue, par exemple aux moyens d'articulation (non représentés) autour d'un axe d'articulation parallèle à cette deuxième partie 13 de tube de bord de fuite 5, de sorte que l'axe d'articulation d'un aileron forme l'angle α défini plus haut avec l'axe d'articulation du volet correspondant pour une aile donnée, ceci étant vérifié pour les deux ailes.

Sur la figure 3, l'angle α peut être par exemple de l'ordre de 135°, mais ce dernier peut varier dans une plage de valeurs comprise entre 90° exclu et 180° exclu, ajusté avec l'allongement de l'aile combiné avec l'efficacité des volets et la valeur souhaitée du déplacement vers le bord d'attaque du foyer de l'aileron.

Les ailerons 8 et 10 adoptent par exemple une forme rectangulaire comme représenté sur la figure 3, et comportent ainsi des côtés, référencés 16 et 17 pour l'aileron droit, et 18 et 19 pour l'aileron gauche, qui sont avantageusement perpendiculaires à leur axe d'articulation, respectivement.

Les moyens de commande des ailerons droit et gauche (non représentés), seront avantageusement constitués de tout moyen connu entrant dans la constitution des commandes de vol conventionnelles pour ce type d'aéronef, par exemple des commandes à câbles dans le cas d'espèce.

Le deuxième exemple d'avion représenté sur la figure 4 est similaire au premier exemple décrit ci-dessus avec l'aide de la figure 3, à la différence que, sur le deuxième exemple de système d'aileron selon l'invention, la deuxième 113 partie du tube de bord de fuite 105 est liée par son autre extrémité à un bord latéral extérieur 107 ou bord marginal de l'ossature d'aile. Il est à noter que sur la figure 4, les éléments fonctionnellement similaires à ceux de la figure 3 sont repris avec la même référence numérique additionnée du nombre 100. Du fait du raccordement de la deuxième 113 partie du tube de bord de fuite 105 au bord marginal, l'angle α est normalement supérieur à celui de l'exemple de la figure 3, et permet ainsi des effets de moindre intensité du dispositif d'aileron selon l'invention. Sur la figure 4, les ailerons 108 et 110 adoptent une forme de parallélogramme dont les côtés sont parallèles à l'axe de roulis 119, respectivement.

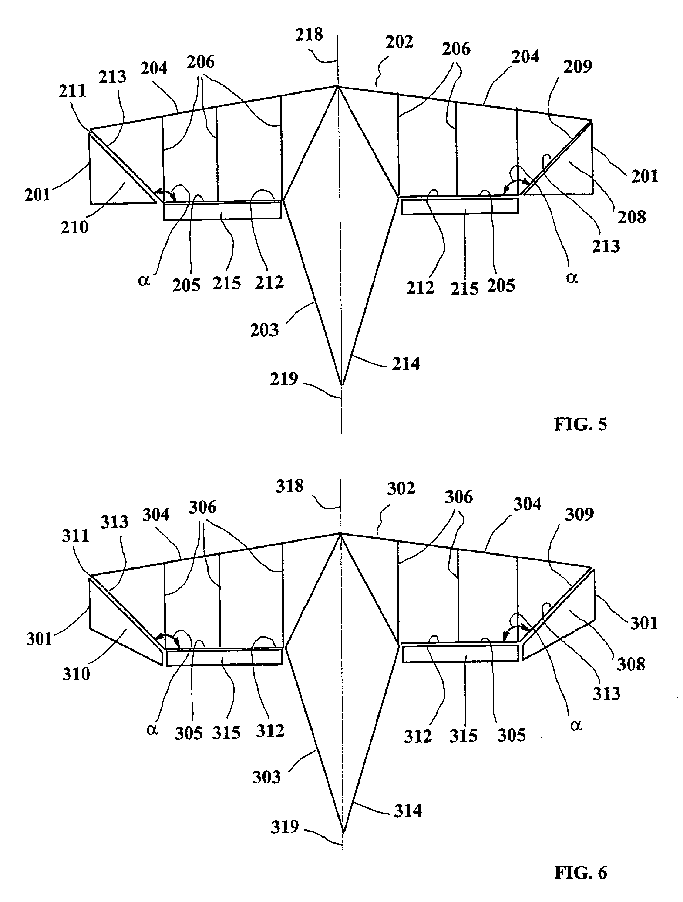

Sur les figures 5 et 6, on a représenté des variantes de forme de l'aileron 8 ou 10 constituant les troisième et quatrième exemples de mode de réalisation du dispositif d'aileron selon l'invention, principalement, mais pas uniquement, applicables à une ossature telle que représentée sur la figure 3. Rappelons que sur cette dernière, les ailerons 8 et 10 comportent des côtés 16, 17 et 18, 19, perpendiculaires à leur axe d'articulation, respectivement. Il est à noter que sur les figures 5 et 6, les éléments fonctionnellement similaires à ceux de la figure 3 sont repris avec la même référence numérique additionnée du nombre 200 et 300 respectivement.

Sur la figure 5, les ailerons 208, 210 adoptent chacun une forme triangulaire, chaque aileron formant l'extrémité libre arrière de l'aile correspondante comme représenté sur la figure, et sur la figure 6, les ailerons 308, 310 adoptent chacun une forme s'élargissant sur la longueur en s'étendant en direction du bord d'attaque. Il est à noter qu'il est possible d'envisager a contrario des ailerons adoptant chacun une forme s'élargissant sur la longueur en s'étendant en direction du bord de fuite (non représenté).

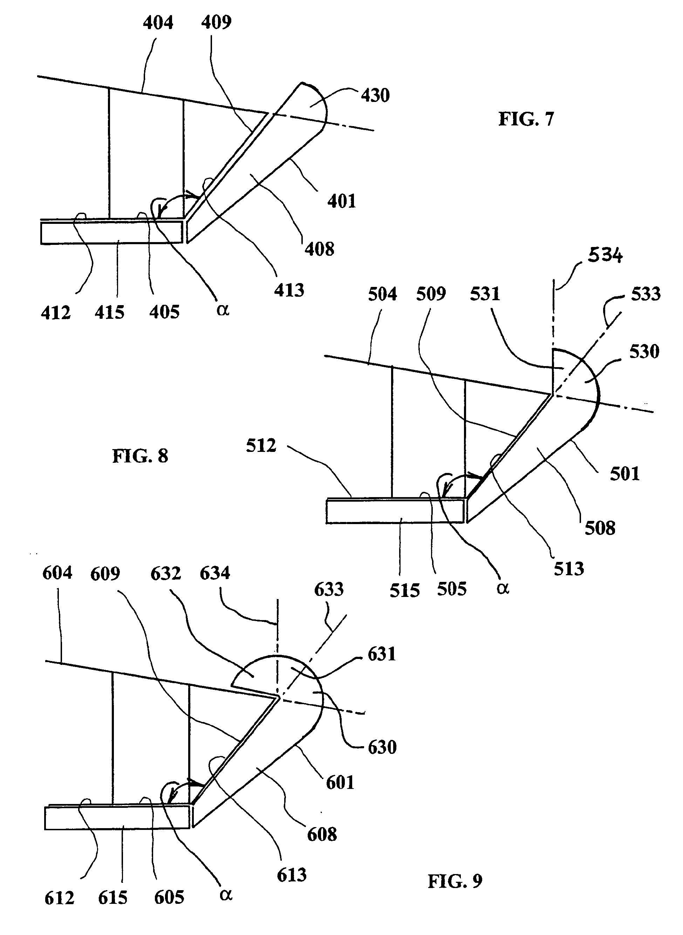

Sur les figures 7 à 9, on a représenté des variantes de forme de l'aileron 8, applicables à l'aileron 10 par symétrie, constituant les cinquième, sixième et septième exemples de mode de réalisation du dispositif d'aileron selon l'invention, principalement, mais pas uniquement, applicables à une ossature telle que représentée sur la figure 3. Il est à noter que sur les figures 7 à 9, les éléments fonctionnellement similaires à ceux de la figure 3 sont repris avec la même référence numérique additionnée du nombre 400, 500 et 600 respectivement.

Sur l'exemple de la figure 7, l'aileron 408 adopte une forme 430 s'étendant en avant du bord d'attaque 404, la forme 430 étant par exemple sensiblement celle d'un secteur de disque s'étendant du bord d'attaque en amont de celui-ci jusqu'à l'axe d'articulation de l'aileron, comme représenté sur la figure 7. Les bords libres de l'aileron 408 seront avantageusement profilés afin d'améliorer la pénétration dans l'air et de diminuer leur Cx. L'aileron 408 adopte dans l'exemple représenté une forme générale s'élargissant sur la longueur en s'étendant en direction du bord d'attaque, configuration non nécessaire à l'application de la caractéristique spécifique de la figure 7 qui est le débord de l'aileron en amont du bord d'attaque. La surface de l'aileron 408 s'étendant en avant du bord d'attaque 404 sera déterminée en fonction de l'accentuation de l'effet recherché tel qu'expliqué plus haut.

Sur l'exemple de la figure 8, l'aileron 508 reprend par exemple la configuration de l'aileron de la figure 7 et adopte en outre une forme 531 s'étendant en avant du bord d'attaque 504 et au delà de l'axe d'articulation 533 de l'aileron 508, la forme 531 étant par exemple sensiblement celle d'un secteur de disque prolongeant le secteur de disque 530 tel que décrit à l'aide de la figure 7, jusqu'à une droite 534 parallèle à l'axe de roulis et interceptant le point d'intersection de l'axe d'articulation de l'aileron 508 et du bord d'attaque, comme représenté sur la figure 8. Les bords libres de l'aileron 508 seront avantageusement profilés selon les besoins afin d'améliorer la pénétration dans l'air et de diminuer leur Cx. L'aileron 508 adopte dans l'exemple représenté une forme générale s'élargissant sur la longueur en s'étendant en direction du bord d'attaque, configuration non nécessaire à l'application de la caractéristique spécifique de la figure 8. La surface de l'aileron 408 s'étendant en avant du bord d'attaque 404 et au delà de l'axe d'articulation de l'aileron sera déterminée en fonction de l'effet de compensation décrit plus haut qui est recherché. Il est à noter que la partie 531 de l'aileron s'étendant au delà de l'axe d'articulation 533 peut comporter à l'intérieur de celle-ci une masse qui permettra avantageusement et le cas échéant de limiter ou d'éviter un problème de vibration de l'aileron (dit "flutter").

Sur l'exemple de la figure 9, l'aileron 608 reprend par exemple la configuration de l'aileron de la figure 8 et adopte en outre une forme 632 s'étendant en avant du bord d'attaque 604 et au delà d'un axe 634 parallèle à l'axe de roulis (non représenté sur la figure 9) et interceptant le point d'intersection de l'axe d'articulation de l'aileron 608 et du bord d'attaque 604, la forme 632 étant par exemple sensiblement celle d'un secteur de disque prolongeant jusqu'à la proximité du bord d'attaque 604 le secteur de disque 631 s'étendant au delà de l'axe d'articulation 633 de l'aileron 608, lui-même prolongeant le secteur de disque 630 s'étendant au delà du bord d'attaque 604, comme représenté sur la figure 9. Les bords libres de l'aileron 608 seront avantageusement profilés selon les besoins afin d'améliorer la pénétration dans l'air et de diminuer leur Cx. L'aileron 608 adopte dans l'exemple représenté une forme générale s'élargissant sur la longueur en s'étendant en direction du bord d'attaque, configuration non nécessaire à l'application de la caractéristique spécifique de la figure 9. La surface de l'aileron 608 s'étendant en avant du bord d'attaque 404 dans son ensemble sera déterminée en fonction des différents effets recherchés.

D'une manière générale, le dispositif d'aileron selon l'invention peut être appliqué à la technologie des avions Ultra Légers Motorisés, et à toute technique de construction d'avions légers dont la structure des ailes se prête au vrillage sous l'effet d'une manoeuvre des ailerons dit "basse vitesse" placés vers l'extrémité libre des ailes.

## Revendications

1. Dispositif d'aileron (1, 101, 201, 301, 401, 501, 601) pour aéronef (2, 102, 202, 302) léger comportant une ossature (3, 103, 203, 303) structurelle de type tubulaire dotée pour chacune des ailes d'un longeron de bord d'attaque (4, 104, 204, 304, 404, 504, 604) et d'un longeron de bord de fuite (5, 105, 205, 305, 405, 505, 605) réunis par une pluralité de nervures (6, 106, 206, 306), comportant au moins :
- un aileron droit (8, 108, 208, 308, 408, 508, 608),
- des moyens d'articulation (9, 109, 209, 309, 409, 509, 609) autour d'un axe d'articulation, de l'aileron droit sur le longeron de bord de fuite de l'ossature d'aile droite de l'aéronef,
- un aileron gauche (10, 110, 210, 310),
- des moyens d'articulation (11, 111, 211, 311) autour d'un axe d'articulation, de l'aileron gauche sur le longeron de bord de fuite de l'ossature d'aile gauche de l'aéronef,
- des moyens de commande des ailerons droit et gauche,
***caractérisé en ce que*** le longeron de bord de fuite de l'ossature des ailes droite et gauche comporte respectivement une première (12, 112, 212, 312, 412, 512, 612) partie et une deuxième (13, 113, 213, 313, 413, 513, 613) partie formant entre elles un angle (α) compris entre 90° exclu et 180° exclu, de telle sorte que :
- la première (12, 112, 212, 312, 412, 512, 612) partie du longeron de bord de fuite est apte à être rattachée par une de ses extrémités à l'ossature de fuselage (14, 114, 214, 314),
- la deuxième (13, 113, 213, 313, 413, 513, 613) partie du longeron de bord de fuite est liée par une de ses extrémités à l'autre extrémité de ladite première partie, porte l'aileron, et s'étend en direction du bord d'attaque, en sorte de déplacer le foyer d'aileron ou la résultante des efforts exercés par l'air sur l'aileron vers le bord d'attaque.

2. Dispositif d'aileron selon la revendication 1, ***caractérisé en ce que*** ladite deuxième (13, 213, 313, 413, 513, 613) partie du longeron de bord de fuite est liée par son autre extrémité au bord d'attaque (4, 204, 304, 404, 504, 604).

3. Dispositif d'aileron selon la revendication 1 ou 2, ***caractérisé en ce que*** ladite deuxième (113) partie du longeron de bord de fuite est liée par son autre extrémité à un bord latéral extérieur (107) ou bord marginal de l'ossature d'aile.

4. Dispositif d'aileron selon l'une quelconque des revendications 1 à 3, ***caractérisé en ce que*** lesdites première (12, 112, 212, 312, 412, 512, 612) et deuxième (13, 113, 213, 313, 413, 513, 613) parties du longeron de bord de fuite sont respectivement constituées de tubes droits.

5. Dispositif d'aileron selon l'une quelconque des revendications 1 à 4, ***caractérisé en ce que*** l'axe d'articulation d'un aileron forme un angle (α) compris entre 90° exclu et 180° exclu, avec l'axe d'articulation d'un volet correspondant de l'aile.

6. Dispositif d'aileron selon l'une quelconque des revendications 1 à 5, ***caractérisé en ce que*** les ailerons (8, 10) comportent des côtés (16, 17 ; 18, 19) perpendiculaires à leur axe d'articulation, respectivement.

7. Dispositif d'aileron selon l'une quelconque des revendications 1 à 5, ***caractérisé en ce que*** les ailerons (208, 210) adoptent une forme triangulaire, respectivement.

8. Dispositif d'aileron selon l'une quelconque des revendications 1 à 5, ***caractérisé en ce que*** les ailerons (308, 310, 408, 508, 608) adoptent une forme s'élargissant sur sa longueur en s'étendant en direction du bord d'attaque, respectivement.

9. Dispositif d'aileron selon l'une quelconque des revendications 1 à 5, ou 8, ***caractérisé en ce que*** les ailerons (408, 410) adoptent une forme (430) s'étendant en avant du bord d'attaque (404), respectivement.

10. Dispositif d'aileron selon la revendication 9, ***caractérisé en ce que*** les ailerons (508, 510) adoptent une forme (531) s'étendant en avant du bord d'attaque (504) et au delà de l'axe d'articulation (533) des ailerons, respectivement.

11. Dispositif d'aileron selon la revendication 10, ***caractérisé en ce que*** les ailerons (608, 610) adoptent une forme (632) s'étendant en avant du bord d'attaque (604) et au delà d'un axe (634) parallèle à l'axe de roulis, respectivement.

## Claims

1. Aileron device (1, 101, 201, 301, 401, 501, 601) for a light aircraft (2, 102, 202, 302) comprising a structural framework (3, 103, 203, 303) of tubular type provided, for each of the rings, with a leading edge spar (4, 104, 204, 304, 404, 504, 604) and with a trailing edge spar (5, 105, 205, 305, 405, 505, 605) which are connected by a plurality of ribs (6, 106, 206, 306), comprising at least:
- a right aileron (8, 108, 208, 308, 408, 508, 608),
- articulation means (9, 109, 209, 309, 409, 509, 609) for articulating the right aileron to the trailing edge spar of the aircraft right wing framework about an axis of articulation,
- a left aileron (10, 110, 210, 310),
- articulation means (11, 111, 211, 311) for articulating the left aileron to the trailing edge spar of the aircraft left wing framework about an axis of articulation,
- right and left aileron control means,
**characterized in that** the trailing edge spar of the right and left wing framework respectively comprises a first part (12, 112, 212, 312, 412, 512, 612) and a second part (13, 113, 213, 313, 413, 513, 613) which between them make an angle (α) of between 90° excluded and 180° excluded, such that:
- the first part (12, 112, 212, 312, 412, 512, 612) of the trailing edge spar can be attached by one of its ends to the fuselage framework (14, 114, 214, 314),
- the second part (13, 113, 213, 313, 413, 513, 613) of the trailing edge spar is connected by one of its ends to the other end of the said first part, carries the aileron, and extends towards the leading edge so as to move the aerodynamic centre of the aileron or the resultant of the forces applied by the air to the aileron towards the leading edge.

2. Aileron device according to Claim 1, **characterized in that** the said second part (13, 113, 213, 313, 413, 513, 613) of the trailing edge spar is connected by its other end to the leading edge (4, 204, 304, 404, 504, 604) .

3. Aileron device according to Claim 1 or 2, **characterized in that** the said second part (113) of the trailing edge spar is connected by its other end to an outer lateral edge (107) or marginal edge of the wing framework.

4. Aileron device according to any one of Claims 1 to 3, **characterized in that** the said first part (12, 112, 212, 312, 412, 512, 612) and the said second part (13, 113, 213, 313, 413, 513, 613) of the trailing edge spar are respectively made of straight tubes.

5. Aileron device according to any one of Claims 1 to 4, **characterized in that** the axis of articulation of an aileron forms an angle (α) of between 90° exclusive and 180° exclusive with the axis of articulation of a corresponding wing flap.

6. Aileron device according to any one of Claims 1 to 5, **characterized in that** the ailerons (8, 10) have sides (16, 17; 18, 19) that are perpendicular to their axis of articulation respectively.

7. Aileron device according to any one of Claims 1 to 5, **characterized in that** the ailerons (208, 210) adopt a triangular shape, respectively.

8. Aileron device according to any one of Claims 1 to 5, **characterized in that** the ailerons (308, 310, 408, 508, 608) adopt a shape that widens along its length as it extends in the direction of the leading edge, respectively.

9. Aileron device according to any one of claims 1 to 5 or 8, **characterized in that** the ailerons (408, 410) adopt a shape (430) extending forward from the leading edge (404), respectively.

10. Aileron device according to Claim 9, **characterized in that** the ailerons (508, 510) adopt a shape (531) extending forward from the leading edge (504) and beyond the axis of articulation (533) of the ailerons, respectively.

11. Aileron device according to Claim 10, **characterized in that** the ailerons (608, 610) adopt a shape (632) extending forward from the leading edge (604) and beyond an axis (634) parallel to the roll axis, respectively.

## Patentansprüche

1. Querrudervorrichtung (1, 101, 201, 301, 401, 501, 601) für leichtes Luftfahrzeug (2, 102, 202, 302) mit einem rohrförmigen Strukturrahmen (3, 103, 203, 303), der für jeden Flügel mit einem Vorderkantenholm (4, 104, 204, 304, 404, 504, 604) und einem Hinterkantenholm (5, 105, 205, 305, 405, 505, 605) versehen ist, die über eine Mehrzahl von Rippen (6, 106, 206, 306) miteinander verbunden sind,
wobei sie zumindest enthält:
- ein rechtes Querruder (8, 108, 208, 308, 408, 508, 608),
- Gelenkmittel (9, 109, 209, 309, 409, 509, 609) zur Anlenkung des rechten Querruders an den Hinterkantenholm des rechten Flügelrahmens des Luftfahrzeugs um eine Gelenkachse herum,
- ein linkes Querruder (10, 110, 210, 310),
- Gelenkmittel (11, 111, 211, 311) zur Anlenkung des linken Querruders an den Hinterkantenholm des linken Flügelrahmens des Luftfahrzeugs um eine Gelenkachse herum,
- Mittel zum Steuern des rechten und des linken Querruders,
**dadurch gekennzeichnet, dass** der Hinterkantenholm des Rahmens des rechten und des linken Flügels jeweils einen ersten Abschnitt (12, 112, 212, 312, 412, 512, 612) und einen zweiten Abschnitt (13, 113, 213, 313, 413, 513, 613) aufweist, die einen Winkel (α) zwischen 90° und 180° (diese beiden Werte ausgenommen) miteinander bilden, so dass
- der erste Abschnitt (12, 112, 212, 312, 412, 512, 612) des Hinterkantenholms mit einem seiner Enden an den Rumpfrahmen (14, 114, 214, 314) angesetzt werden kann,
- der zweite Abschnitt (13, 113, 213, 313, 413, 513, 613) des Hinterkantenholms mit einem seiner Enden an das andere Ende des ersten Abschnitts angefügt ist, das Querruder trägt und sich in Richtung der Vorderkante erstreckt, so dass der Neutralpunkt des Querruders bzw. die Resultierende der von der Luft auf das Querruder ausgeübten Kräfte zur Vorderkante hin verlagert wird.

2. Querrudervorrichtung nach Anspruch 1, **dadurch gekennzeichnet, dass** der zweite Abschnitt (13, 213, 313, 413, 513, 613) des Hinterkantenholms mit seinem anderen Ende an die Vorderkante (4, 204, 304, 404, 504, 604) angefügt ist.

3. Querrudervorrichtung nach Anspruch 1 oder 2, **dadurch gekennzeichnet, dass** der zweite Abschnitt (113) des Hinterkantenholms mit seinem anderen Ende an eine seitliche Außenkante (107) bzw. Randkante des Flügelrahmens angefügt ist.

4. Querrudervorrichtung nach einem der Ansprüche 1 bis 3, **dadurch gekennzeichnet, dass** der erste (12, 112, 212, 312, 412, 512, 612) und der zweite Abschnitt (13, 113, 213, 313, 413, 513, 613) des Hinterkantenholms jeweils aus geraden Rohren bestehen.

5. Querrudervorrichtung nach einem der Ansprüche 1 bis 4, **dadurch gekennzeichnet, dass** die Gelenkachse eines Querruders einen Winkel (α) zwischen 90° und 180° (diese beiden Werte ausgenommen) mit der Gelenkachse einer entsprechenden Flügelklappe einschließt.

6. Querrudervorrichtung nach einem der Ansprüche 1 bis 5, **dadurch gekennzeichnet, dass** die Querruder (8, 10) Seitenflächen (16, 17; 18, 19) aufweisen, die jeweils senkrecht zu deren Gelenkachse verlaufen.

7. Querrudervorrichtung nach einem der Ansprüche 1 bis 5, **dadurch gekennzeichnet, dass** die Querruder (208, 210) jeweils eine Dreiecksform annehmen.

8. Querrudervorrichtung nach einem der Ansprüche 1 bis 5, **dadurch gekennzeichnet, dass** die Querruder (308, 310, 408, 508, 608) jeweils eine Form annehmen, die sich über ihre Länge erweitert und dabei in Richtung Vorderkante verläuft.

9. Querrudervorrichtung nach einem der Ansprüche 1 bis 5 oder 8, **dadurch gekennzeichnet, dass** die Querruder (408, 410) jeweils eine Form (430) annehmen, die vor der Vorderkante (404) verläuft.

10. Querrudervorrichtung nach Anspruch 9, **dadurch gekennzeichnet, dass** die Querruder (508, 510) eine Form (531) annehmen, die jeweils vor der Vorderkante (504) und über die Gelenkachse (533) der Querruder hinaus verläuft.

11. Querrudervorrichtung nach Anspruch 10, **dadurch gekennzeichnet, dass** die Querruder (608, 610) eine Form (632) annehmen, die jeweils vor der Vorderkante (604) und über eine sich parallel zur Rollachse erstreckende Achse (634) hinaus verläuft.
